# EUROPÄISCHE PATENTSCHRIFT

(11) **EP 1 713 651 B1**
(45) Veröffentlichungstag und Bekanntmachung des Hinweises auf die Patenterteilung: **07.11.2007**
(21) Anmeldenummer: 05707310.8
(22) Anmeldetag: 10.02.2005
(51) Int. Cl.: B60G 17/015, B62D 9/02, B62K 5/00

(54) **MEHRSPURIGES KURVENNEIGBARES FAHRZEUG UND VERFAHREN ZUM NEIGEN EINES FAHRZEUGS**
MULTITRACK CURVE-TILTING VEHICLE, AND METHOD FOR TILTING A VEHICLE
VEHICULE MULTIPISTE INCLINABLE DANS LES COURBES ET PROCEDE D'INCLINAISON D'UN VEHICULE

(30) Priorität: 13.02.2004 CH 238042004
(43) Veröffentlichungstag der Anmeldung: 25.10.2006
(73) Patentinhaber: Geiser, Friedrich, 6714 Nüziders (AT)
(72) Erfinder: Geiser, Friedrich, 6714 Nüziders (AT)
(74) Vertreter: Büchel, Kaminski & Partner
(86) Internationale Anmeldenummer: PCT/EP2005/001340
(87) Internationale Veröffentlichungsnummer: WO 2005/077683

(56) Entgegenhaltungen:
- WO-A-99/47372
- WO-A-99/54186
- DE-A- 4 201 412
- DE-A- 4 406 245
- DE-A- 10 012 035
- DE-A- 19 501 087
- DE-A- 19 738 826
- FR-A- 2 450 480
- US-A- 2 998 263
- US-A- 4 368 796
- US-A- 4 921 263
- US-A- 6 026 920
- US-A1- 2002 173 892
- US-A1- 2003 098 662

## Beschreibung

Die Erfindung betrifft ein kurvenneigbares Fahrzeug mit Mitteln zum seitlichen Neigen wenigstens eines Abschnitts des Fahrzeuges um eine im Wesentlichen zu der Fahrzeuglängsachse parallele Neigachse, so dass während einer Fahrt - insbesondere zur Kurvenfahrt oder bei schrägem oder unebenem Untergrund - der Schwerpunkt des Fahrzeugs quer zur Fahrtrichtung verlagerbar ist. Das Fahrzeug umfasst mindestens einen Fahrzeugsitz, der auf dem neigbaren Abschnitt des Fahrzeugs angeordnet ist, für einen das Fahrzeug steuernden Fahrer. Bei dem Fahrzeug kann es sich allgemein um jedes beliebige mehrspurige motor- oder muskelkraftbetriebene Fahrzeug, wie beispielsweise ein Strassenfahrzeug mit Rädern oder ein Schnee- oder Wasserfahrzeug mit Kufen, mit mindestens drei Abstützpunkten gegenüber einem Untergrund, der z.B. von einer Fahrbahn, Schnee, Eis oder Wasser gebildet wird, handeln. Ausserdem betrifft die Erfindung ein Verfahren zum Neigen eines solchen Fahrzeugs.

Kurvenneigbare mehrspurige Fahrzeuge, die aufgrund ihrer Fahrwerksgeometrie ähnliche Fahreigenschaften wie die eines einspurigen Fahrzeugs besitzen, sind in unterschiedlichen Varianten aus dem Stand der Technik bekannt. Derartige Fahrzeuge werden unter anderem in FR 2550507, FR 2616405, DE 01063473, DE 02707562, DE 03546073, DE 19513649 und WO 97/27071 beschrieben und weisen beispielsweise zwei nebeneinander beabstandet auf beiden Seiten des Massenschwerpunkts des Fahrzeugs symmetrisch zur Längsachse angeordnete Räder und ein drittes, in der mittigen Spur in der Längsachse zwischen den beiden Räder in oder entgegen der Fahrtrichtung versetztes Rad auf, wobei entweder die beiden seitlichen Räder oder das mittige Rad richtungssteuerbar sind.

Die Radaufhängungen der beiden seitlichen Räder sind derart im Wesentlichen in Richtung der Fahrzeughochachse beweglich gelagert und miteinander gekoppelt, dass ein Bewegen der einen Radaufhängung in die eine Richtung, z.B. nach oben, zu einem gegenläufigen Bewegen der anderen Radaufhängung in die andere Richtung, z.B. nach unten, führt. Somit ist ein freies Neigen des Fahrzeugs um die im Wesentlichen zur Fahrzeuglängsachse parallele Neigachse realisierbar. Die gegenläufige Kopplung ist beispielsweise mittels eines Lenkerparallelogramms, einer Waagenaufhängung oder Seilzügen mechanisch, mittels zweier hydraulisch in Verbindung stehenden Hydraulikzylinder hydraulisch oder mittels Elektromotoren elektrisch realisierbar. Alternativ ist es möglich, anstelle des mittigen Rads ebenfalls zwei seitliche Räder mit in Richtung der Fahrzeughochachse beweglicher Lagerung und gegenläufiger Kopplung einzusetzen, wodurch ebenfalls eine freie Neigbarkeit des Fahrzeugs ermöglicht wird. Die seitlichen parallelogrammartig gelagerten Räder wirken als ein einziges fiktives mittleres Rad. Da Pendelbewegungen und Schräglegungen in den beschriebenen Varianten weitgehend widerstandsfrei durchführbar sind und das gegenüber dem Untergrund parallelogrammartige Schrägstellen der Räder ähnlich wie bei einem Motor- oder Fahrrad durch Kreiselpräzession zu der Stabilisierung des Fahrzeugs beiträgt, wird dem Fahrer ein Fahrgefühl vermittelt, das weitgehend dem bekannten Motorradfahrgefühl gleicht. Dieser Zustand der freien Neigbarkeit des Fahrzeugs wird daher im Folgenden als "Zweiradmodus" bezeichnet. Um bei niedrigen Geschwindigkeiten oder Stillstand ein ungewolltes Schrägstellen und Umkippen des Fahrzeugs zu verhindern, weisen die aus dem Stand der Technik bekannten kurvenneigbaren Fahrzeuge teilweise Vorrichtungen auf, die bei niedriger Geschwindigkeit die freie Beweglichkeit der seitlichen Radaufhängungen einschränken oder blockieren und gegebenenfalls ein aktives Aufrichten oder Neigen des Fahrzeugs ermöglichen. Somit ist es möglich, ohne den zwangsläufigen Einsatz der Beine des Fahrers ein Stabilisieren bei Stillstand des Fahrzeugs durch Blockieren der freien Beweglichkeit der seitlichen Radaufhängungen zu gewährleisten. Dies ist besonders bei schweren Fahrzeugen, die nur mit grösserem Kraftaufwand im Stillstand stabilisierbar wären, vorteilhaft. Dieser stabile Zustand, in welchem kein freies Neigen des Fahrzeugs durch Gewichtsverlagerung des Fahrers oder durch Gegenlenken möglich ist, wird im Folgenden als "Dreiradmodus" bezeichnet, unabhängig davon, ob es sich bei dem Fahrzeug um ein Neigfahrzeug mit drei oder mehr Rädern oder anderen Abstützelementen handelt. In diesem reinen "Dreiradmodus" ist das Neigen des Fahrzeuges nur noch aktiv durch eine Neigvorrichtung möglich, nicht jedoch durch Gewichtsverlagerung des Fahrers oder direkt am neigbaren Abschnitt angreifende Zentrifugalkraft, beispielsweise durch das von Zweiradfahrzeugen bekannte Gegenlenken.

Aus dem Stand der Technik ist ebenfalls bekannt, dass die Ausbildung eines Übergangsbereichs zwischen dem reinen Zweiradmodus und dem reinen Dreiradmodus vorteilhaft ist. In diesem Zwischenbereich wird die freie Neigbarkeit durch das teilweise Wirken von erzeugten Neigkräften, insbesondere Neiggegenkräften, beeinflusst. Hierdurch ist es beispielsweise möglich, bei zu starker, durch Gewichtsverlagerung durch den Fahrer oder durch Lenken hervorgerufener freier Neigung des Fahrzeugs durch aktives Aufbringen einer Neiggegenkraft ein Umkippen des Fahrzeugs zu vermeiden.

Problematisch erweist sich in der Praxis jedoch eben dieser Übergangsbereich vom Zweiradmodus, also dem Zustand der freien Beweglichkeit der beiden seitlichen Radaufhängungen, zum Dreiradmodus, also dem Zustand, in welchem ein freies seitliches Neigen durch Blockieren der freien Beweglichkeit der seitlichen Radaufhängungen verhindert wird. Denn aktive automatische Eingriffe in die freie Neigbarkeit des Fahrzeugs werden vom Fahrer als unangenehm und ungewohnt empfunden und rufen zum Teil gefährliche Schreckreaktionen beim Fahrer hervor. Während das Fahrzeug bei höheren Geschwindigkeiten typische Eigenschaften eines Motorrads aufweist, verhält sich das Fahrzeug bei langsamer Fahrt oder Stillstand wie ein mehrspuriger Wagen, der durch den Fahrer entweder gar nicht oder nur durch gezielten unergonomischen Eingriff des Fahrers neigbar ist.

Die WO 95/34459 beschreibt ein selbststabilisierendes Dreiradfahrzeug mit einem kraftunterstützten Kippelement zum Verkippen eines Fahrzeugabschnitts um die Fahrzeuglängsachse. Das Fahrzeug ist selbstausbalancierend und umfasst einen Sensor, welcher mit einem richtungssteuerbaren Rad zum Erfassen der Grösse und der Richtung der Last verbunden ist, die auf das richtungssteuerbare Rad auszuüben ist, um einen Richtungswechsel desselben während einer Bewegung zu erzeugen und/oder aufrechtzuerhalten. Der Sensor ist hierzu mit den Kippelementen verbunden, um ein Verkippen als Funktion der Erfassung durch den Sensor zu bewirken. Das Neigen des Fahrzeugs ist somit im Wesentlichen abhängig von Lenkkräften und -winkeln.

Die FR 2 450 480 zeigt ein Fahrzeug mit neigbarem Fahrersitz, wobei die Neigung des Fahrersitzes die Neigung der Fahrzeugkarosserie gegenüber der Achse beeinflusst.

Die US 4,368,796 beschreibt eine Vorrichtung zum Steuern der Neigung eines Fahrzeuges. Die Neigungsverstellung erfolgt mittels eines Pendels, das über eine Wirkverbindung mit einem Neigungsverstellungsmechanismus des Fahrzeuges verbunden ist. In einer angeblich bevorzugten Ausführungsform ist die Sitzfläche des Fahrzeugsitzes schwenkbar ausgeführt und besitzt an ihrer Unterseite eine Gabel, die mit einem gewissen Spiel die Auslenkung des Pendels beeinflussen kann. Somit ist es möglich, das Pendel auch ohne Wirken einer Zentrifugalkraft oder einer Seitenneigung des Fahrzeugs auszuschwenken, indem der Fahrer sein Körpergewicht auf dem Fahrersitz stark seitlich verlagert. Ein wesentlicher Nachteil dieses Systems besteht darin, dass geschwindigkeitsunabhängig eine Kopplung zwischen der Neigungssensorik und dem Fahrzeugsitz vorhanden ist, die vor allem bei hohen Geschwindigkeiten, bei welchen eine übermässige aktive Beeinflussung der Neigung des Fahrzeugs unerwünscht ist, zu gefährlichen Situationen führen kann. Da das Neigen des Fahrzeugs bei stets mittiger Haltung des Fahrers auf dem Fahrzeug aktiv über das Pendel erfolgt und der Fahrer nur im Falle eines seines Erachtens ungenügenden Neigungswinkels des Fahrzeugs durch Verlagerung seines Schwerpunkts auf das Neigungsverhalten Einfluss nehmen kann, ist es nicht möglich, dem Fahrer das typische Fahrverhalten eines Zweiradfahrzeugs zu vermitteln. Denn das Neigungsverhalten eines Zweiradfahrzeugs wird insbesondere einerseits durch die mit zunehmender Fahrzeuggeschwindigkeit zunehmenden Kreiselkräfte der Räder, andererseits durch die Gewichtsverlagerung des Fahrers beeinflusst, wobei die Stabilität des Zweiradfahrzeugs mit zunehmender Geschwindigkeit zunimmt. Durch das zwangsläufig notwendige Spiel der Gabel ist ein sensibles Steuern der Fahrzeugneigung durch Gewichtsverlagerung gar nicht möglich.

Aus der WO 97/27071 ist ein Fahrzeug mit zwei nebeneinander liegenden Schwingen, die dieses gegenüber dem Untergrund abstützen, bekannt. Die Schwingen sind über Eingriffselemente miteinander koppelbar, so dass bestimmte Relativlagen zueinander fixierbar und in einer speziellen Ausführung aktiv zueinander verstellbar sind, wodurch die Neigung des Fahrzeugs verstellt werden kann. Das beschriebene Fahrzeug erlaubt in einem Normalbetrieb, dem sogenannten Zweiradmodus, nahezu widerstandsfreie Pendelbewegungen sowie eine Schräglegung des Fahrzeugs, wobei sich das Fahrzeug so verhält, als würde es auf einem fiktiven mittleren Hinterrad fahren. Das Neigen erfolgt bei dieser Betriebsart im Wesentlichen durch Gewichtsverlagerung des Fahrers. In einem Fahrzeugrahmen sind drehbar zwei Schwingen gelagert. Die Schwingen tragen an ihrer Aussenseite am Ende jeweils ein Rad. An den der Fahrzeugmitte zugewandten Enden der Drehachsen der Schwingen sind Eingriffselemente angeordnet, welche fest mit der Drehachse der Schwingen verbunden sind und sich bei Pendelbewegungen in entgegengesetzter Richtung zueinander verdrehen. Am vorderen Ende des Fahrzeugrahmens ist eine Vorderradgabel mit einem Vorderrad und einem Lenker verbunden. In einer Ausführungsform sind die beiden Schwingen mit einer Waage verbunden, welche im Drehpunkt drehbar mit dem Fahrzeugrahmen verbunden ist und die gegenläufige Bewegung der Schwingen bewirkt. Die Schwingen können über gedämpfte Federbeine miteinander verbunden sein. In einer anderen Ausführung erfolgt die gegenläufige Bewegung der Schwingen durch zwei umlaufende Seilzüge. Ausserdem werden in der WO 97/27071 Ausführungsformen beschrieben, bei denen die gegenläufige Bewegung mittels eines Kegelradgetriebes oder einem hydraulischen Ausgleich ermöglicht wird. Der hydraulische Ausgleich koppelt die jeweils mit einem Hydraulikzylinder verstellbaren Schwingen gegenläufig, wobei die beiden Hydraulikzylinder über eine Verbindungsleitung, die gegebenenfalls einen Gasdruckspeicher zur Federung des Fahrzeugs und ein Sperrventil zum Arretieren der Schwingen umfasst, verbunden sind. Ausserdem werden verschiedene Einrichtungen zur Blockierung bzw. Beeinflussung der Pendelbewegung dargestellt. Bei einer ebenfalls beschriebenen Einrichtung zur Beeinflussung der Pendelbewegung ist es mittels einer zangenartigen Vorrichtung möglich, das Fahrzeug normal zur Fahrbahn aufzurichten, indem die zangenartige Vorrichtung über einen Bowden-Zug zusammengezogen wird, so dass zwei an den beiden Eingriffselementen positionierte Bolzen zwangsweise in eine achsgleiche Lage gedrückt werden.

Weiters wird in der WO 97/27071 ein Dreirad-Fahrzeug beschrieben, bei welchem die Eingriffselemente zur Beeinflussung der Pendelbewegung als Hebel ausgebildet und über zwei Verbindungsstangen mit den Hebeln einer zentralen Stelleinheit verbunden sind. In einer beschriebenen Ausführung weist das Fahrzeug eine Einrichtung zur Erfassung der Geschwindigkeit, einen Neigungs- oder Gleichgewichtssensor sowie zusätzliche, proportional wirkende Steuerknöpfe links und rechts zur manuellen Neigungsverstellung durch den Fahrer auf. Diese Steuerknöpfe können entweder an einer Lenkstange oder aber auch beispielsweise im Bereich der Knie des Fahrers vorgesehen sein. Alle Befehle und Rückmeldungen werden in einer elektrischen oder elektronischen Steuereinheit verarbeitet und von dort an eine beispielsweise elektrische Stelleinheit weitergeleitet. Durch einen solchen besonderen Aufbau lassen sich willkürlich oder automatisch ferngesteuert bestimmte Stellungen der Schwingen erreichen und dies insbesondere in einem Geschwindigkeitsbereich bis ungefähr 4 km/h. In diesem niedrigen Geschwindigkeitsbereich ist die Selbststabilisierung des Fahrzeugs insbesondere durch die Kreiselwirkung der Räder noch zu gering für einen gleichmässigen Geradeauslauf des Fahrzeugs. Daher wird bei dem beschriebenen Fahrzeug die gegenläufige Beweglichkeit der Schwingen bei einer vorbestimmten Mindestgeschwindigkeit, z.B. 4 km/h, blockiert und das Fahrzeug aus einer allfällig ungewollten Schräglage in eine lotrechte Position aufgerichtet. Durch diese Funktion wird das Absetzen der Füsse des Fahrers auf den Untergrund überflüssig, da in der Normallage das Fahrzeug durch die seitlichen Räder gegen Umkippen gestützt ist. Eine weitere Verbesserung der Fahreigenschaft wird gemäss der WO 97/27071 durch eine mehrscheibige Lamellenkupplung als Eingriffsmittel zwischen den beiden Enden der als Eingriffselemente dienenden Achsen der Schwingen erzielt. Durch Schliessen dieser Lamellenkupplung wird die gegenläufige Bewegung der Schwingen blockiert. Dieses Blockieren findet bei unterschreiten der Mindestgeschwindigkeit bei Normallage des Fahrzeugs statt. Bei einer weiteren Weiterbildung dieses Fahrzeugs sorgt ein zusätzlicher Neigungssensor in Form eines Pendels für die Messung allfälliger seitlicher Gefälle einer Fahrbahn oder einer Zentrifugalkraft, so dass das Fahrzeug bei niedrigen Geschwindigkeiten stets in eine aufrechte oder der Kurvengeschwindigkeit entsprechende Position gebracht wird. Befehle einer zentralen Stelleinrichtung werden über die mehrscheibige Lamellenkupplung, eine mechanische Lastmomentsperre und einen Elektromotor mit Getriebe umgesetzt. Bei Unterschreiten der Mindestgeschwindigkeit von 4 km/h wird automatisch von der freien Beweglichkeit der Schwingen, also dem "Zweiradmodus", auf automatische, über den Gleichgewichtssensor erfolgende Gleichgewichtssteuerung umgeschaltet, so dass das Fahrzeug auch bei seitlich geneigter Fahrbahn senkrecht bleibt. Ein Neigen des Fahrzeugs durch Gewichtsverlagerung des Fahrers ist in diesem Modus nicht möglich, da die Schwingen aufgrund der geschlossenen Kupplung nicht gegeneinander frei beweglich sind. Wird in diesem automatischen Gleichgewichtssteuerungs-Modus eine Kurve eingeleitet, so neigt sich das Fahrzeug automatisch entsprechend der Geschwindigkeit und dem Kurvenradius als Reaktion auf die durch die Zentrifugalkraft bedingte Auslenkung des Pendels des Neigungssensors. Zum Einleiten einer Kurve oder für rasche Ausweichmanöver kann der Fahrer in diesem Modus über den linken oder rechten Steuerknopf am Lenker oder an den Knien die Schräglage des Fahrzeugs insbesondere tendenziell, d.h. nicht zwangsweise, beeinflussen. Die Stärke dieser Beeinflussung ist proportional zum Druck auf den jeweiligen Steuerknopf, wird jedoch nach oben durch ein Signal des Neigungssensors begrenzt, um ein Umkippen zu verhindern.

Während bei den oben beschriebenen kurvenneigbaren Fahrzeugen im Wesentlichen das gesamte Fahrzeug neigbar ist, sind ebenfalls Kurvenneigfahrzeuge aus dem Stand der Technik bekannt, insbesondere aus der WO 98/24681 oder der DE 3226361 A, die in sich verdrehbar zweiteilig aufgebaut sind und ein neigbares Fahrzeugvorderteil, mit einem mittig angeordneten, lenkbaren Vorderrad und einem Fahrzeugsitz, und ein zweirädriges, nicht neigbares Fahrzeughinterteil besitzen. Da derartige Fahrzeuge nicht vollständig neigbar sind und nicht alle Räder beim Neigen eine Schrägstellung einnehmen, so dass die Kreiselpräzessionskräfte in unterschiedlichen Ebenen wirken, und ausserdem vollkommen andere geometrische Verhältnisse herrschen, wird dem Fahrer nur bedingt das Fahrverhalten eines Motorrads vermittelt.

In der DE 195 01 087 Al wird ein lenkbares Leichtfahrzeug mit einem seitlich neigbaren Fahrersitz beschrieben, wobei der Fahrer beim Kurvenfahren seinen Körper in angelehnter Haltung in den Sitz in Richtung auf den Kurvenmittelpunkt verlagern kann oder der Fahrersitz aktiv in Richtung auf den Kurvenmittelpunkt geneigt wird. Die Wirkverbindung zwischen dem Fahrersitz und dem restlichen Fahrzeug ist derart ausgebildet, dass durch aktives oder passives Neigen des Fahrersitzes der Fahrkomfort erhöht werden kann, indem sich der Fahrer entweder selbst durch Kraftaufbringung in die Kurve legen kann oder der Fahrersitz zumindest teilweise in die Kurve geneigt wird. Im letzteren Fall werden über eine Sensorik Fahrzustände erfasst, welche auf die Sitzverstellung wirken.

Die beschriebenen, aus dem Stand der Technik bekannten kurvenneigbaren mehrspurigen Fahrzeuge weisen das gemeinsame Problem auf, dass besonders bei niedrigen Geschwindigkeiten ein Ausbalancieren oder ein dem Wunsch des Fahrers entsprechendes Neigen des Fahrzeugs nur bedingt möglich ist oder vom Fahrer als unangenehm oder ungewohnt empfunden wird. Zwar erweisen sich manche bekannten Lösungen als befriedigend bei höherer Geschwindigkeit, bei welcher sich das Fahrzeug im Zweiradmodus befindet und eine freie Neigbarkeit des Fahrzeugs möglich ist, so dass dem Fahrer im Wesentlichen das Gefühl vermittelt wird, als fahre er auf einem Zweirad. Jedoch bei Fahrten mit niedriger Geschwindigkeit oder im Stillstand erweisen sich die bekannten kurvenneigbaren mehrspurigen Fahrzeuge als problematisch. Der Einsatz der Füsse zur Stabilisierung des Fahrzeugs ist teilweise höchst kritisch, da derartige Fahrzeuge zum Teil eine zu grosse Masse zur sicheren Stabilisierung des Fahrzeugs aufweisen oder aufgrund einer geschlossenen Kabine einen Fusseinsatz gar nicht erlauben. Ein Umkippen kann zu erheblichen Verletzungen, insbesondere Bein-, Arm- und Kopfverletzungen, führen. Ein Blockieren der freien Neigbarkeit, also ein insbesondere automatisches geschwindigkeitsgeschaltetes Umschalten auf einen Dreiradmodus, vermindert zwar die Gefahr des Umkippens, jedoch ist ein Neigen des Fahrzeugs in diesem Modus nur noch durch Betätigen von Bedienelementen oder mittels eines Neigungssensors, der im Falle einer schrägen Fahrbahn oder Kurvenfahrten bei niedriger Geschwindigkeit ein aktives Neigen auslöst, möglich. Da ein Neigungssensor gattungsgemäss erst nach Erfassen einer Schräglage oder einer Zentrifugalkraft ein aktives Neigen des Fahrzeugs auslösen kann, wird das aktive Neigen des Fahrzeugs vom Fahrer als unnatürlich und unangenehm empfunden. Vor allem bei Fahrten auf unebener Strasse mit niedriger Geschwindigkeit, die keine freie Neigbarkeit des Fahrzeugs zulässt, da insbesondere die stabilisierenden Kreiselkräfte der Räder zu gering sind, so dass das Fahrzeug im Dreiradmodus gefahren werden muss, erweist sich eine Neigungssteuerung über einen Neigungssensor als ausgesprochen problematisch. Bei plötzlicher Neigung des Fahrzeugs - beispielsweise aufgrund des Durchfahrens eines grösseren Schlaglochs mit nur einem seitlichen Rad - kippt das Fahrzeug zuerst stark zur Seite. Erst danach wird diese Schräglage von dem Neigungssensor erfasst, so dass in einem darauf folgenden Schritt das Fahrzeug wieder in die Lotrechte aktiv geneigt wird. Nach der Durchfahrt des Schlaglochs nimmt das im Neigungszustand befindliche Fahrzeug erneut eine Schräglage ein, so dass wieder mittels des Neigungssensor aktiv die Neigung verstellt werden muss. Zwar wäre es möglich, dass der Fahrer bei Erkennen einer solchen Situation, beispielsweise noch vor Durchfahren einer Schräge, selbst die Neigung manuell vorverstellt, jedoch erweist sich diese Möglichkeit als unergonomisch und kaum handhabbar. Auch eine tendenzielle Beeinflussung der Neigung, also ein Übergangsbereich zwischen dem Zweirad und dem Dreiradmodus, kann nur bedingt Abhilfe schaffen. Ein weiteres Problem ergibt sich bei niedrigen Geschwindigkeiten bei Einfahrt in eine Kurve. Von einem Zweirad wäre der Fahrer es gewohnt, noch vor dem Richtungswechsel bereits sein Gewicht zur Seite zu verlagern oder kurz in die Gegenrichtung zu lenken, so dass sich das Fahrzeug bereits vor dem eigentlichen Richtungswechsel in die zu fahrende Kurve neigt. Während sich das Fahrzeug neigt, wird die eigentliche Kurvenfahrt eingeleitet, so dass das zur Seite in die Kurve fallende Fahrzeug von der Zentrifugalkraft abgefangen wird. Dieses von einem Motorrad gewohnte Fahrverhalten lässt sich jedoch bei niedrigen Geschwindigkeiten mit den bekannten kurvenneigbaren mehrspurigen Fahrzeugen nicht simulieren. Das im Vergleich zu einem Motorrad teilweise höhere Gewicht derartiger Fahrzeuge lässt eine Beeinflussung der Neigung oder ein Stabilisieren über den menschlichen Gleichgewichtssinn durch Verlagern des Gewichts des Fahrers auf dem Fahrzeug zum Teil nur bei höheren Geschwindigkeiten zu, so dass ein Motorradfahrgefühl teils nur bei höheren Geschwindigkeiten vermittelbar ist.

Befindet sich der Fahrer in einer aussermittigen Position, so dass ein freies Neigen durch Gewichtsverlagerung gar nicht möglich ist, kann ein Neigen nur aktiv erfolgen. Im Stand der Technik ist das Einleiten eines sensiblen Neigens nur mittels aktiven Betätigens einer Bedieneinheit durch den Fahrer oder als Reaktion auf eine Zentrifugalkraft oder eine Lenkbewegung möglich, so dass ein motorradartiges Fahren des Fahrzeugs durch Gewichtsverlagerung des Fahrers nicht möglich ist.

Die Tatsache, dass die bekannten kurvenneigbaren mehrspurigen Fahrzeuge bei höheren Geschwindigkeiten im Zweiradmodus vollkommen andere Neigeigenschaften als bei niedrigen Geschwindigkeiten im Dreiradmodus aufweist, da der Fahrer nur bei höheren Geschwindigkeiten, nicht jedoch bei langsamer Fahrt ein Neigen durch Körpergewichtsverlagerung auslösen kann, führt bei derartigen Fahrzeugen zu erheblichen Akzeptanzproblemen bei den Fahrern.

Eine vorausschauende Fahrweise, die ein sensibles Verstellen der Seitenneigung des Fahrzeugs bereits vor Beginn einer Kurvenfahrt oder Fahrt auf eine Schräge vorsieht, ist bei den aus dem Stand der Technik bekannten kurvenneigbaren mehrspurigen Fahrzeugen in ergonomisch akzeptabler Weise weder durch manuellen Eingriff des Fahrers, noch durch einen automatischen Eingriff möglich.

Aufgabe der Erfindung ist es daher, ein kurvenneigbares mehrspuriges Fahrzeug bereitzustellen, das sich bei guter Stabilität unter allen Fahrbedingungen sowohl bei höheren, als auch bei niedrigeren Geschwindigkeiten durch eine von dem Fahrer intuitiv beeinflussbare und seinen Erwartungen entsprechende Seitenneigbarkeit auszeichnet. Ausserdem ist es Aufgabe der Erfindung, die aus dem Stand der Technik bekannten gattungsgemässen kurvenneigbaren mehrspurigen Fahrzeuge, insbesondere die aus der WO 97/27071 bekannten Dreirad-Fahrzeuge, hinsichtlich ihrer Seitenneigungseigenschaften zu verbessern.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beruht auf der Erkenntnis, dass selbst geringste Gleichgewichtsänderungen von dem hochsensiblen Gleichgewichtssinn des Menschen erfasst werden und unwillkürliche Reaktionsbewegungen zur Folge haben, und sowohl das Ausüben einer seitlichen Beschleunigung auf den menschlichen Körper eines ein Fahrzeug bedienenden Fahrers durch das Wirken einer Zentrifugalkraft infolge eines Richtungswechsels oder das Verändern der Seitenneigung des Fahrzeugs, als auch alleinig die Intention des Fahrers, einen Richtungswechsel oder eine Schräglage des Fahrzeugs beispielsweise unmittelbar vor einer Kurvenfahrt herbeizuführen, zu einer intuitiven aktiven Bewegung des menschlichen Körpers führt, durch die der Fahrer den Schwerpunkt seines eigenen Körpers zu derjenigen Seite zu verlagern versucht, zu welcher sich seines Erachtens das Fahrzeug neigen soll. Dieser Effekt ist beispielsweise beim Steuern eines herkömmlichen mehrspurigen Personenwagens beobachtbar. Noch vor Einfahrt in eine Kurve und Einschlagen der Lenkung verlagert der Fahrer intuitiv seinen Körperschwerpunkt in Richtung der Kurve, indem er seinen Rumpf von einer aufrechten Position in eine leichte Schräglage versetzt. Hierdurch übt der obere Teil des Rumpfs eine Kraft in Richtung der Kurve und der untere Teil des Rumpfs eine Kraft entgegen der Richtung der Kurve aus. Auch bei einer Seitenneigung eines Fahrzeugs, welcher der Fahrer entgegenwirken möchte, versucht der Fahrer seinen Körperschwerpunkt in diejenige Richtung seitlich zu verlagern, in welche sich das Fahrzeug neigen soll.

Erfindungsgemäss wird eine Seitenkraft erfasst, die der Körper des Fahrers eines seitenneigbaren mehrspurigen Fahrzeugs auf zumindest einen Fahrzeugsitz-Abschnitt eines Fahrzeugsitzes, der auf einem neigbaren Abschnitt des Fahrzeugs angeordnet ist, in eine seitliche Querrichtung zur Fahrtrichtung ausübt. Diese Sitzseitenkraft resultiert aus der intuitiven aktiven Verlagerung des Schwerpunkts des menschlichen Körpers des Fahrers durch leichtes Schräglegen des Rumpfs. Diese Sitzseitenkraft wirkt somit, abhängig vom Erfassungspunkt, im Bereich des Oberkörpers seitlich in Richtung der gewünschten Neigungsrichtung und im Bereich des Beckens und der Sitzfläche in die entgegengesetzte seitliche Richtung. Die Sitzseitenkraft wird über Erfassungsmittel erfasst, die in einer derart ausgebildeten Wirkverbindung mit den Mitteln zum seitlichen Neigen des Fahrzeugs stehen, dass das seitliche Neigen in Abhängigkeit von der erfassten Sitzseitenkraft erfolgt und die Neiggeschwindigkeit eine Funktion zumindest aus der Sitzseitenkraft und der Geschwindigkeit des Fahrzeugs ist, wobei sich die Neiggeschwindigkeit bei zunehmender Sitzseitenkraft - mit einem bei zunehmender Geschwindigkeit des Fahrzeugs sinkendem Faktor - vergrössert. Bei hohen Geschwindigkeiten bewirkt eine Sitzseitenkraft somit eine geringere oder gegebenenfalls gar keine Reaktion der Mittel zum aktiven seitlichen Neigen des Fahrzeugs, während bei niedrigen Geschwindigkeiten die Sensibilität der Wirkverbindung zwischen den Erfassungsmitteln und den Mitteln zum seitlichen Neigen grösser ist. Hierdurch wird das typische Fahrverhalten eines Zweiradfahrzeugs simuliert, das bei hohen Geschwindigkeiten aufgrund der Kreiselkräfte der Räder wesentlich höhere Stabilitätseigenschaften aufweist und somit wesentlich langsamer auf eine Gewichtsverlagerung des Fahrers reagiert als bei niedrigen Geschwindigkeiten. Die Mittel zum seitlichen Neigen können von aus dem Stand der Technik bekannten, insbesondere hydraulischen, elektromotorischen oder pneumatischen Aktoren gebildet werden. Der Neigungswinkel kann durch diese Aktoren entweder tendenziell beeinflusst werden, beispielsweise durch Aufbringen eines Gegenmoments, wobei bei Nicht-Wirken einer Sitzseitenkraft das Fahrzeug im Wesentlich frei ohne den Einfluss der Aktoren neigbar ist, oder zwangsweise verstellt werden, wobei kein freies Neigen des Fahrzeugs möglich ist, sondern die Änderung der Seitenneigung alleinig eine Funktion der Sitzseitenkraft und gegebenenfalls weiterer erfasster Werte wie der Geschwindigkeit des Fahrzeugs, dem Lenkwinkel, der Schräglage oder der Zentrifugalkraft ist. Ein Zwischenbereich zwischen diesen beiden Modi ist selbstverständlich möglich, wobei der Einfluss der Aktoren insbesondere geschwindigkeitsabhängig ist und bei zunehmender Geschwindigkeit abnimmt.

In einer möglichen Ausführungsform sind die Mittel zum seitlichen Neigen und die Wirkverbindung derart ausgebildet, dass bei Nicht-Wirken einer Sitzseitenkraft das Fahrzeug im Wesentlich frei ohne den Einfluss der Aktoren neigbar ist und erst bei Wirken einer Sitzseitenkraft ein Neigen durch Eingreifen der Aktoren erfolgt. Dieser Eingriff erfolgt in dieser speziellen Ausführungsform derart, dass die freie Neigbarkeit des Fahrzeuges in die Richtung, in welche die aktive Neigung durch die Aktoren erfolgt, insofern erhalten bleibt, als dass ein zusätzliches freies Neigen weiterhin möglich ist, jedoch einem freien Neigen entgegen der Richtung, in welche das aktive Neigen erfolgt, durch die Aktoren entgegengewirkt wird. Diese Funktion ist beispielsweise aus sicherheitstechnischen Überlegungen von Bedeutung, da während eines durch die Sitzseitenkraft ausgelösten aktiven Neigens in eine Richtung beim Auftreten einer zusätzlichen äusseren Neigkraft in diese Richtung - beispielsweise beim Fahren auf einen auf der Kurveninnenseite befindlichen Randstein - sich das Fahrzeug frei zu dieser Seite weiter neigen kann, ohne dass es zu einem Umstürzen des Fahrzeugs zur Kurvenaussenseiten kommt.

Unter der Sitzseitenkraft in eine Querrichtung zur Fahrtrichtung ist ebenfalls ein am Sitz gemessenes Drehmoment um eine im Wesentlichen zur Fahrzeuglängsachse parallel verlaufende Achse zu verstehen. So ist es beispielsweise möglich, die Sitzseitenkraft nicht direkt zu ermitteln, sondern beispielsweise Druckkräfte auf der Sitzfläche zu erfassen oder ein Verkippen der Sitzfläche um eine im Wesentlichen zur Längsachse des Fahrzeugs parallelen Achse zu detektieren. Dies wird ebenfalls von der Erfindung erfasst.

Die Erfindung bezieht sich allgemein auf ein mehrspuriges kurvenneigbares Fahrzeug mit mindestens drei Abstützelementen - insbesondere Rädern oder Kufen - zumindest zum Übertragen einer Seitenführungskraft zwischen dem Fahrzeug und einem Untergrund, wobei mindestens zwei der mindestens drei Abstützelemente auf entgegengesetzten Seiten bezüglich der Fahrzeuglängsachse seitlich angeordnet sind und mindestens eines der mindestens drei Abstützelemente zur Richtungssteuerung des Fahrzeugs lenkbar ist. Ausserdem umfasst das Fahrzeug Mittel zum seitlichen Neigen wenigstens eines Abschnitts des Fahrzeuges um eine im Wesentlichen zu der Fahrzeuglängsachse parallele Neigachse, so dass während einer Fahrt - insbesondere zur Kurvenfahrt oder bei schrägem oder unebenem Untergrund - der Schwerpunkt des Fahrzeugs quer zur Fahrtrichtung verlagerbar ist. Bevorzugt umfasst die Erfindung ein Dreiradfahrzeug, bei welchem die Abstützelemente als Räder ausgebildet sind und das einen kurvenneigbaren Fahrzeugrahmen aufweist, wobei zwei der drei Räder nebeneinander im Wesentlichen symmetrisch zur Fahrzeuglängsachse und das dritte Rad mittig versetzt angeordnet sind. In einer Ausführungsform ist das Fahrzeug derart ausgestaltet und das seitliche Neigen durch die Mittel zum seitlichen Neigen erfolgt derart, dass die Räder eine der Neigung entsprechende Schrägstellung einnehmen und die beiden nebeneinander liegenden Räder als ein fiktives mittiges Rad empfunden werden, wodurch das Fahrzeug ein ähnliches Fahrverhalten wie ein einspuriges Zweirad aufweisen kann. Der Fahrzeugsitz für einen das Fahrzeug steuernden Fahrer ist auf dem neigbaren Abschnitt des Fahrzeugs angeordnet.

Ausserdem umfasst die Erfindung ein Verfahren zum Neigen eines mehrspurigen kurvenneigbaren Fahrzeugs, wobei in einem Schritt die Sitzseitenkraft, die der Körper des Fahrers zumindest auf einen Fahrzeugsitz-Abschnitt des Fahrzeugsitzes in eine seitliche Querrichtung zur Fahrtrichtung ausübt, über Erfassungsmittel erfasst wird, in einem weiteren Schritt die Geschwindigkeit des Fahrzeugs erfasst wird, wobei diese Schritte in beliebiger Reihenfolge sein können, und in einem weiteren Schritt wenigstens der neigbare Abschnitt des Fahrzeugs zu einer Seite geneigt wird, wobei die Seite durch die Richtung der Sitzseitenkraft bestimmt wird und die Neiggeschwindigkeit eine Funktion zumindest aus der Grösse der erfassten Sitzseitenkraft und der erfassten Geschwindigkeit ist und bei zunehmender Sitzseitenkraft - mit einem bei zunehmender Geschwindigkeit des Fahrzeugs sinkendem Faktor - die Neiggeschwindigkeit erhöht wird.

Die Erfindung umfasst auch Neigfahrzeuge, bei welchen nur ein Teilabschnitt neigbar ist. Ausserdem umfasst die Erfindung auch Fahrzeuge, bei welchen der Fahrzeugsitz aussermittig angeordnet ist. In diesem Fall ist es erfindungsgemäss auch möglich, ein Fahrverhalten des Fahrzeugs zu simulieren, das dem eines rein gleichgewichtsgesteuerten einspurigen Fahrzeugs entspricht.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Ausführungsform des erfindungsgemässen mehrspurigen kurvenneigbaren Fahrzeugs in einer Seitenansicht,
- Fig. 2: eine Ausführungsform des erfindungsgemässen mehrspurigen kurvenneigbaren Fahrzeugs in einer Rückansicht,
- Fig. 3: eine Detailansicht eines über ein Gelenklager schwenkbaren Fahrzeugsitzes mit Erfassungsmitteln,
- Fig. 4: eine Detailansicht eines Fahrzeugsitzes mit nachgiebigen Seitenwülsten mit Erfassungsmitteln, und
- Fig. 5: eine Detailansicht eines Fahrzeugsitzes mit einer beweglichen Sitzfläche mit Erfassungsmitteln.

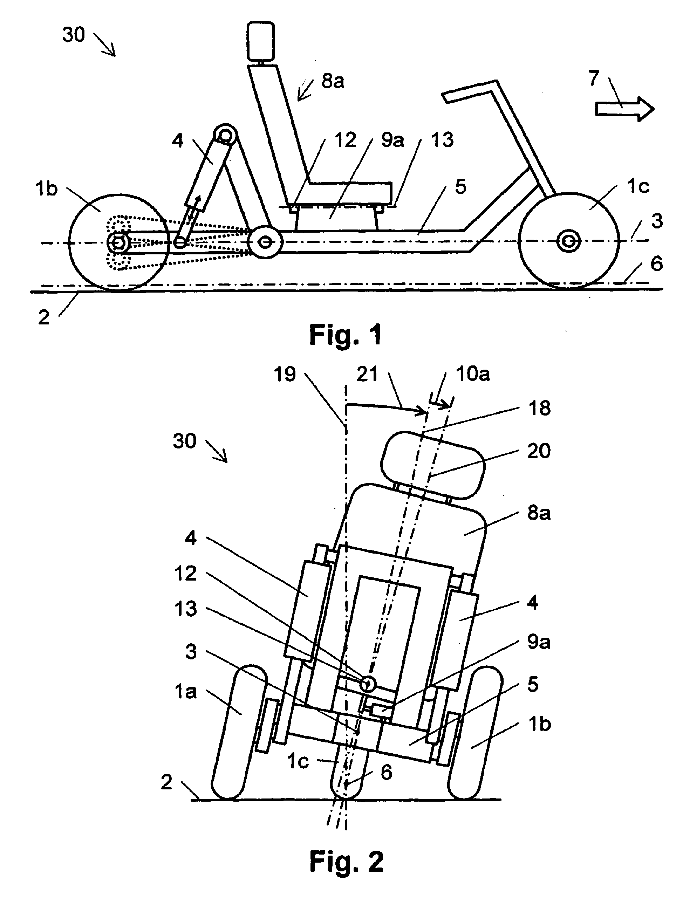

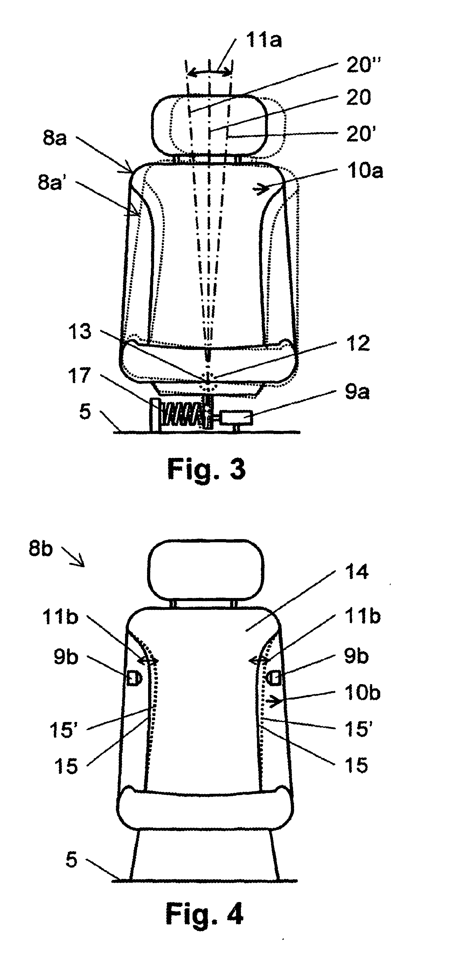

In Fig. 1 und in Fig. 2 ist eine mögliche Ausführungsform des erfindungsgemässen mehrspurigen kurvenneigbaren Fahrzeugs in einer Seitenansicht bzw. einer Rückansicht schematisch dargestellt. Das dargestellte Dreiradfahrzeug 30 umfasst drei auf einem Untergrund 2 aufliegende Abstützelemente 1a, 1b und 1c, die als ein Vorderrad 1c, ein rechtes Hinterrad 1b und ein linkes Hinterrad 1a ausgebildet sind. Das Vorderrad 1c ist lenkbar und mittig in der Fahrzeuglängsachse 3 angeordnet, während die beiden seitlichen Räder 1a und 1b im Wesentlichen symmetrisch zur Fahrzeuglängsachse 3 montiert sind. Das Dreiradfahrzeug 30 besitzt Mittel zum seitlichen Neigen 4 des Fahrzeugrahmens 5 um eine im Wesentlichen zu der Fahrzeuglängsachse 3 parallele Neigachse 6, so dass während einer Fahrt - insbesondere zur Kurvenfahrt oder bei schrägem oder unebenem Untergrund - der Schwerpunkt des Fahrzeugs quer zur Fahrtrichtung 7 verlagerbar ist. Das seitliche Neigen erfolgt durch die Mittel zum seitlichen Neigen 4 derart und das Dreiradfahrzeug 30 ist derart gestaltet, dass die Räder 1a, 1b und 1c eine der Neigung entsprechende Schrägstellung einnehmen, wie in Fig. 2 gezeigt. Somit wirken die beiden seitlichen Räder 1a und 1b wie ein fiktives mittiges Rad in der Fahrzeuglängsachse 3, so dass das Dreiradfahrzeug 30 im Wesentlichen das Fahrverhalten eines einspurigen Zweirads besitzt. Auf dem Fahrzeugrahmen 5 ist ein in Fig. 3 detaillierter schematisch dargestellter Fahrzeugsitz 8a angeordnet, der gegenüber dem Fahrzeugrahmen 5 mittels eines Gelenklagers 12 um eine im Wesentlichen zur Fahrzeuglängsachse 3 parallel verlaufende und bezogen auf den Fahrzeugsitz mittige Fahrzeugsitz-Drehachse 13 schwenkbar gelagert ist. Somit ist es möglich, den Fahrzeugsitz 8a um die Fahrzeugsitz-Drehachse 13 in eine seitliche Querrichtung 10a zur Fahrtrichtung 7 innerhalb eines Fahrzeugsitz-Bewegungsbereichs 11a zu schwenken. In Fig. 3 wird der Fahrzeugsitz-Bewegungsbereich 11a durch eine Fahrzeugsitz-Hochachse 20 in ihren beiden Grenzstellungen 20' und 20" am Rand des Fahrzeugsitz-Bewegungsbereichs 11a veranschaulicht. Zur besseren Anschaulichkeit ist der Bewegungsbereich 11a in Fig. 2 und 3 übertrieben dargestellt, denn in der Praxis ist es sinnvoll, den Bewegungsbereich dermassen klein zu gestalten, dass das Schwenken des Fahrzeugsitzes 8a vom Fahrer nicht bemerkt wird. Der in mittiger Position in Form einer durchgehenden Linie gezeigte Fahrzeugsitz 8a ist an einem Rand des Fahrzeugsitz-Bewegungsbereichs 11a durch eine unterbrochene Linie 8a' dargestellt. Um den Fahrzeugsitz 8a über eine Rückstellkraft in eine mittige Ausgangsstellung der Fahrzeugsitzhochachse 20 elastisch zentrieren zu können, sind als Federzentriermittel 17 ausgebildete elastische Zentriermittel vorgesehen. Somit ist es möglich, eine Sitzseitenkraft, die der Körper des Fahrers zumindest auf dem Fahrzeugsitz 8a in eine seitliche Querrichtung 10a zur Fahrtrichtung 7 ausübt, über die Auslenkung des Fahrzeugsitz 8a von dessen Ausgangsstellung im Fahrzeugsitz-Bewegungsbereich 11a zu ermitteln. Hierzu sind Erfassungsmittel, die als ein Positionsdetektor 9a ausgebildet sind, zum Erfassen der Position des Fahrzeugsitzes 8a innerhalb des Fahrzeugsitz-Bewegungsbereichs 11a unterhalb des Fahrzeugsitzes 8a montiert. Der Positionsdetektor 9a steht in einer derart ausgebildeten Wirkverbindung mit den Mitteln zum seitlichen Neigen 4, dass das seitliche Neigen in Abhängigkeit von der erfassten Sitzseitenkraft zu derjenigen Seite erfolgt, die der Richtung der Sitzseitenkraft entspricht. In Fig. 2 ist der Vorgang des Neigens veranschaulicht. Der Fahrer übt in eine seitliche Querrichtung 10a zur Fahrtrichtung 7 eine Sitzseitenkraft auf, indem er seinen Oberkörper im gezeigten Beispiel nach rechts lehnt, um den Schwerpunkt seines Körpers intuitiv nach rechts zu verlagern, in der Absicht, dass das Fahrzeug sich nach rechts neigen soll. Dieser Vorgang findet beispielsweise vor oder während einer Rechtskurve oder der Fahrt auf einer nach links hängenden Schräge statt. Als Reaktion der Verlagerung des Körperschwerpunktes neigt sich der Fahrzeugsitz 8a unter Gegenwirken der Federzentriermittel 17 nach rechts. Dies wird von dem Positionsdetektor 9a erfasst, der über die Wirkverbindung ein Signal an die Mittel zum seitlichen Neigen 4 sendet, so dass sich der Fahrzeugrahmen 5 mit einer von der Sitzseitenkraft abhängigen Geschwindigkeit zu derjenigen Seite 10a, die der Richtung der Sitzseitenkraft entspricht, neigt und eine Fahrzeugschräglage 21, gemessen zwischen der Lotrechten 19 und der Fahrzeughochachse 18, eingenommen wird. Um das Fahrzeug wieder zurück zu neigen, verlagert der Fahrer seinen Schwerpunkt nach links, so dass das Dreiradfahrzeug 30 wieder eine lotrechte Position einnimmt. Die Sitzseitenkraft auf den Fahrzeugsitz 8a wird vom Fahrer durch ein aktives seitliches Neigen seines Rumpfs ausgeübt, wobei sich der Fahrer gegebenenfalls an einem Fussbrett oder am Lenkrad abstützt, um das Verlagern seines Körperschwerpunkts durch seitliches Neigen seines Rumpfs einzuleiten. In einer möglichen Ausführungsform besitzen die Federzentriermittel 17 eine variable, bei zunehmender Geschwindigkeit des Fahrzeugs zunehmende Federvorspannung, so dass die Rückstellkraft und somit die Sensibilität der Wirkverbindung durch die zunehmende Rückstellkraft mit steigender Geschwindigkeit abnimmt. Somit ist es möglich, dass die Wirkverbindung zwischen dem Positionsdetektor 9a und den Mitteln zum seitlichen Neigen 4 derart ausgebildet ist, dass die Neiggeschwindigkeit eine Funktion zumindest aus der Sitzseitenkraft und der Geschwindigkeit des Fahrzeugs ist, wobei sich die Neiggeschwindigkeit bei zunehmender Sitzseitenkraft - mit einem bei zunehmender Geschwindigkeit des Fahrzeugs sinkendem Faktor - vergrössert. Selbiges ist selbstverständlich ebenfalls beispielsweise durch eine elektronische Steuerung realisierbar.

Die Mittel zum seitlichen Neigen 4 sind im gezeigten Ausführungsbeispiel hydraulisch ansteuerbar. Die nicht dargestellte Wirkverbindung zwischen dem Positionsdetektor 9a und den Mitteln zum seitlichen Neigen 4 wird von einer Hydraulikverbindung gebildet. Der Positionsdetektor 9a kann hierbei von einer hydraulischen Einheit, insbesondere ein hydraulisches Ventil, beispielsweise ein 4/3-Wegeventil, gebildet werden, mittels welchem die Mittel zum seitlichen Neigen 4 über die Hydraulikverbindung ansteuerbar sind. In diesem Fall sind die Hydraulikzylinder der Mittel zum seitlichen Neigen 4 bei mittiger Position des Fahrzeugsitzes 8a hydraulisch verbunden, so dass ein freies Neigen des Fahrzeugs möglich ist (Zweiradmodus), während bei aufgrund einer Sitzseitenkraft schrägem Sitz durch Verschieben des 4/3-Wegeventils Hydraulikflüssigkeit aktiv von dem einen zum anderen Zylinder mittels einer nicht dargestellten Hydraulikpumpe gefördert wird, so dass sich das Fahrzeug neigt. Über ein Sperrventil (nicht dargestellt) kann erzielt werden, das ein zusätzliches freies Neigen in Richtung des aktiven Neigens weiterhin möglich ist, wohingegen ein freies Neigen in Gegenrichtung des aktiven Neigens gesperrt wird.

Alternativ ist es möglich, dass die Mittel zum seitlichen Neigen 4 elektrisch ansteuerbar sind und die Wirkverbindung zwischen den Erfassungsmitteln 9a und den Mitteln zum seitlichen Neigen 4 als nicht dargestellte elektrische Signalverbindung ausgebildet ist. Der Positionsdetektor 9a wird in diesem Fall beispielsweise von einem Piezo-Sensor, mittels welchem die Mittel zum seitlichen Neigen 4 über die elektrische Signalverbindung ansteuerbar sind, gebildet.

In Fig. 4 wird eine alternative Ausführungsform eines Fahrzeugsitzes 8b, der nachgiebige Seitenwülste 15 mit als Positionsdetektoren ausgebildeten Erfassungsmitteln 9b besitzt, gezeigt. Der auf dem neigbaren Fahrzeugrahmen 5 montierte Fahrzeugsitz 8b umfasst eine Lehne 14, an deren beiden Seitenflanken zwei Seitenwülsten 15 für einen Seitenhalt des Oberkörpers des Fahrers ausgearbeitet sind. Die Seitenwülste 15 sind in eine seitliche Querrichtung 10b zur Fahrtrichtung 7 innerhalb eines Bewegungsbereichs 11b beweglich oder nachgiebig. Diese Beweglichkeit kann insbesondere durch eine elastische Lagerung der Sitzseitenwülste 15 oder durch eine elastische Polsterung erlangt werden. Um sich den individuellen Körpermassen eines Fahrers anzupassen, sind die Sitzseitenwüste 15 in ihrer Breite verstellbar. Versucht der Fahrer, seinen Körperschwerpunkt intuitiv zum Neigen des Dreiradfahrzeugs 30 in die zu neigende Richtung seitlich zu verlagern, indem er seinen Rumpf seitlich verdreht, wird ein Druck auf die jeweilige Seitenwulst 15 ausgeübt. Durch diesen Druck, der einer Sitzseitenkraft entspricht, wird zumindest eine der beiden Sitzseitenwülste 15 verformt oder bewegt, in Fig. 4 dargestellt durch unterbrochene Linien der Sitzseitenwülste 15', wobei diese Verformung oder Bewegung der Sitzseitenwülste 15 von angebrachten Positionsdetektoren 9b erfasst wird, wodurch ein seitliches Neigen, wie oben beschrieben, zu der Seite der jeweiligen nach aussen gedrückten Sitzseitenwulst 15 erfolgt. Somit ist die Wirkverbindung zwischen den Positionsdetektoren 9b und den Mitteln zum seitlichen Neigen 4 derart ausgebildet, dass sich das Dreiradfahrzeug 30 zu derjenigen Seite, die der Richtung der Sitzseitenkraft entspricht, neigt. Die Positionsdetektoren 9b können beispielsweise von bekannten Druckschaltern oder von zwei Kissen mit integriertem Drucksensor ausgebildet sein. In einer speziellen Ausführungsform befindet sich in den beiden Seitenwülstern 15 jeweils ein Fluidkissen, wobei die beiden Fluidkissen in fluidischer Verbindung stehen. Ein Druckdifferenzsensor oder ein Durchflusssensor detektiert hierbei eine allfällige Druckdifferenz zwischen den beiden Sitzseitenwülsten 15 und somit eine Sitzseitenkraft, die der Fahrer auf den Fahrzeugsitz 8b ausübt. In einer weiteren speziellen, nicht dargestellten Ausführungsform der Erfindung befinden sich die beispielsweise als zwei Fluidkissen ausgebildeten Erfassungsmittel in der linken und rechten Hälfte der Sitzfläche des Fahrzeugsitzes.

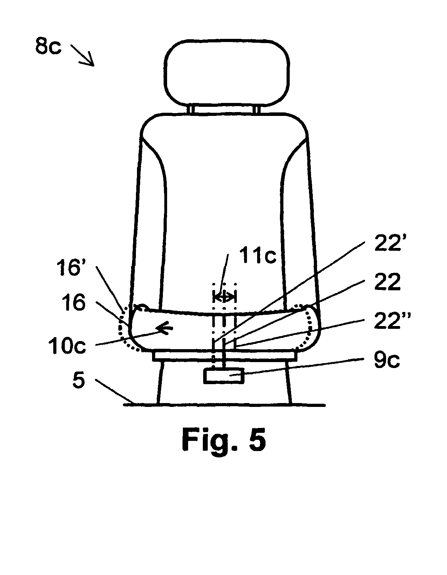

Fig. 5 zeigt eine weitere alternative Ausführungsform eines Fahrzeugsitzes 8c mit Erfassungsmitteln 9c. Der Fahrzeugsitz 8c umfasst eine Sitzfläche 16, die in eine seitliche Querrichtung 10c zur Fahrtrichtung 7 innerhalb eines Bewegungsbereichs 11c beweglich ist. Der Bewegungsbereich 11c wird in Fig. 5 anhand der Sitzflächenhochachse 22 und ihren beiden Randlagen 22' und 22'' veranschaulicht. Diese Beweglichkeit wird beispielsweise über ein Linearwälzlager ermöglicht. Versucht der Fahrer, seinen Körperschwerpunkt intuitiv zu verlagern, indem er seinen Rumpf in die Richtung, in welche sich das Fahrzeug neigen soll, legt, so wird hierdurch eine Sitzseitenkraft auf die Sitzfläche 16 des Fahrzeugsitzes 8c in eine Richtung ausgeübt, die der gewünschten Neigrichtung entgegengesetzt ist. Eine Verschiebung der über nicht dargestellte Federzentriermittel elastisch zentrierten Sitzfläche 16 nach aussen, in Fig. 5 durch unterbrochene Linien der Sitzfläche 16' gezeigt, wird von als ein Positionsdetektor 9c ausgebildeten Erfassungsmitteln erfasst, wodurch über die Wirkverbindung zwischen dem Positionsdetektor 9c und den Mitteln zum seitlichen Neigen 4 ein seitliches Neigen zu derjenigen Seite, die der Richtung der Sitzseitenkraft entgegengesetzt ist, ausgelöst wird. Im Gegensatz zu den in Fig. 3 und 4 gezeigten Ausführungsbeispielen erfolgt somit das Neigen in die der Sitzseitenkraft entgegengesetzte Richtung. In einer weiteren Ausführungsform wird vollkommen auf die Lehne des Fahrzeugsitzes 8c verzichtet, so dass ein Sattel mit der Sitzfläche 16 den gesamten Fahrzeugsitz 8c bildet.

Selbstverständlich sind weitere Ausführungsformen zur Erfassung einer Sitzseitenkraft, beispielsweise in der Sitzfläche oder Lehne, realisierbar. Die Erfindung beschränkt sich nicht auf die gezeigten, rein beispielhaft schematisch dargestellten Ausführungen, insbesondere nicht nur auf ein dreirädriges Fahrzeug mit einem einzelnen Vorderrad und zwei unabhängigen Hinterrädern, sondern umfasst allgemein kurvenneigbare Gefährte jeglicher Bauart.

## Patentansprüche

1. Mehrspuriges kurvenneigbares Fahrzeug mit mindestens drei Abstützelementen (1a, 1b, 1c) - insbesondere Rädern oder Kufen - zumindest zum Übertragen einer Seitenführungskraft zwischen dem Fahrzeug und einem Untergrund (2), wobei
• mindestens zwei (1a, 1b) der mindestens drei Abstützelemente auf entgegengesetzten Seiten bezüglich der Fahrzeuglängsachse (3) seitlich angeordnet sind und
• mindestens eines (1c) der mindestens drei Abstützelemente zur Richtungssteuerung des Fahrzeugs lenkbar ist, mit
• Mitteln zum seitlichen Neigen (4) wenigstens eines Abschnitts (5) des Fahrzeuges um eine im Wesentlichen zu der Fahrzeuglängsachse (3) parallele Neigachse (6), so dass während einer Fahrt - insbesondere zur Kurvenfahrt oder bei schrägem oder unebenem Untergrund - der Schwerpunkt des Fahrzeugs quer zur Fahrtrichtung (7) verlagerbar ist, und
• mindestens einem Fahrzeugsitz (8a, 8b, 8c), der auf dem neigbaren Abschnitt (5) des Fahrzeugs angeordnet ist, für einen das Fahrzeug steuernden Fahrer,
**dadurch gekennzeichnet, dass**
• Erfassungsmittel (9a, 9b, 9c) zur Erfassung einer Sitzseitenkraft, die der Körper des Fahrers zumindest auf einen Fahrzeugsitz-Abschnitt des Fahrzeugsitzes (8a, 8b, 8c) in eine seitliche Querrichtung (10a, 10b, 10c) zur Fahrtrichtung (7) ausübt, vorgesehen sind,
• die Erfassungsmittel (9a, 9b, 9c) in einer derart ausgebildeten Wirkverbindung mit den Mitteln zum seitlichen Neigen (4) stehen, dass
• das seitliche Neigen in einer Abhängigkeit von der erfassten Sitzseitenkraft erfolgt und
• die Neiggeschwindigkeit eine Funktion zumindest aus der Sitzseitenkraft und der Geschwindigkeit des Fahrzeugs ist, wobei sich die Neiggeschwindigkeit bei zunehmender Sitzseitenkraft - mit einem bei zunehmender Geschwindigkeit des Fahrzeugs sinkendem Faktor - vergrössert.

2. Mehrspuriges kurvenneigbares Fahrzeug
nach Anspruch 1,
**dadurch gekennzeichnet, dass**
• die Abstützelemente als Räder (1a, 1b, 1c) und das Fahrzeug als ein Dreiradfahrzeug (30) mit einem kurvenneigbaren Fahrzeugrahmen (5) ausgebildet sind, wobei zwei. (1a, 1b) der drei Räder nebeneinander im Wesentlichen symmetrisch zur Fahrzeuglängsachse (3) und das dritte Rad (1c) mittig versetzt im Wesentlichen in der Fahrzeuglängsachse (3) angeordnet sind, und
• das seitliche Neigen durch die Mittel zum seitlichen Neigen (4) derart erfolgt und das Fahrzeug derart gestaltet ist, dass die Räder (1a, 1b, 1c) eine der Neigung entsprechende Schrägstellung einnehmen und die zwei nebeneinander liegenden Räder (1a, 1b) als ein einziges mittiges fiktives Rad im Wesentlichen in der Fahrzeuglängsachse (3) wirken.

3. Mehrspuriges kurvenneigbares Fahrzeug
nach Anspruch 1 oder 2,
**dadurch gekennzeichnet, dass**
• zumindest der Fahrzeugsitz-Abschnitt des Fahrzeugsitzes (8a, 8b, 8c) in eine seitliche Querrichtung (10a, 10b, 10c) zur Fahrtrichtung (7) innerhalb eines Fahrzeugsitz-Bewegungsbereichs (11a, 11b, 11c) beweglich ist und
• die Erfassungsmittel (9a, 9b, 9c) derart ausgestaltet sind, dass sie die Sitzseitenkraft durch direkte oder indirekte Kraftmessung oder Wegmessung zumindest an dem Fahrzeugsitz-Abschnitt des Fahrzeugsitzes (8a, 8b, 8c) quantitativ oder qualitativ erfassen.

4. Mehrspuriges kurvenneigbares Fahrzeug
nach Anspruch 3,
**dadurch gekennzeichnet, dass**
der Fahrzeugsitz (8a) oder der Fahrzeugsitz-Abschnitt über ein Gelenklager (12) mit einer im Wesentlichen zur Fahrzeuglängsachse (3) parallel verlaufenden und bezogen auf den Fahrzeugsitz mittigen Fahrzeugsitz-Drehachse (13) so gelagert ist, dass der Fahrzeugsitz (8a) um die Fahrzeugsitz-Drehachse (13) in die seitliche Querrichtung (10a) zur Fahrtrichtung (7) innerhalb des Fahrzeugsitz-Bewegungsbereichs (11a) schwenkbar ist.

5. Mehrspuriges kurvenneigbares Fahrzeug
nach Anspruch 3,
**dadurch gekennzeichnet, dass**
• der Fahrzeugsitz (8b) eine Lehne (14) mit Seitenwülsten (15) für einen Seitenhalt des Oberkörpers des Fahrers aufweist und
• die Seitenwülste (15) die den in die seitliche Querrichtung (10b) zur Fahrtrichtung (7) innerhalb des Fahrzeugsitz-Bewegungsbereichs (11b) beweglichen Fahrzeugsitz-Abschnitt bilden.

6. Mehrspuriges kurvenneigbares Fahrzeug
nach Anspruch 3,
**dadurch gekennzeichnet, dass**
• der Fahrzeugsitz (8c) eine Sitzfläche (16) umfasst oder als eine Sitzfläche (16) ausgebildet ist, und
• die Sitzfläche (16) die den in die seitliche Querrichtung (10c) zur Fahrtrichtung (7) innerhalb des Fahrzeugsitz-Bewegungsbereichs (11c) beweglichen Fahrzeugsitz-Abschnitt bildet.

7. Mehrspuriges kurvenneigbares Fahrzeug
nach Anspruch 4 oder 5,
**dadurch gekennzeichnet, dass**
die Wirkverbindung zwischen den Erfassungsmitteln (9a, 9b) und den Mitteln zum seitlichen Neigen (4) derart ausgebildet ist, dass das seitliche Neigen zu derjenigen Seite, die der Richtung der Sitzseitenkraft entspricht, erfolgt.

8. Mehrspuriges kurvenneigbares Fahrzeug
nach Anspruch 6,
**dadurch gekennzeichnet, dass**
die Wirkverbindung zwischen den Erfassungsmitteln (9c) und den Mitteln zum seitlichen Neigen (4) derart ausgebildet ist, dass das seitliche Neigen zu derjenigen Seite, die der Richtung der Sitzseitenkraft entgegengesetzt ist, erfolgt.

9. Mehrspuriges kurvenneigbares Fahrzeug
nach einem der Ansprüche 3 bis 8,
**dadurch gekennzeichnet, dass**
• elastische Zentriermittel (17) vorgesehen sind, die zumindest den in die seitliche Querrichtung (10a, 10b, 10c) zur Fahrtrichtung (7) innerhalb des Fahrzeugsitz-Bewegungsbereichs (11a, 11b, 11c) beweglichen Fahrzeugsitz-Abschnitt über eine Rückstellkraft in einer mittigen Ausgangsstellung zentrieren, so dass aus der Position zumindest des Fahrzeugsitz-Abschnitt des Fahrzeugsitzes (8a, 8b, 8c) innerhalb des Fahrzeugsitz-Bewegungsbereichs (11a, 11b, 11c) die Sitzseitenkraft ermittelbar ist, und
• die Erfassungsmittel als mindestens ein Positionsdetektor (9a, 9b, 9c), der die Position zumindest des Fahrzeugsitz-Abschnitts des Fahrzeugsitzes innerhalb des Fahrzeugsitz-Bewegungsbereichs erfasst, ausgebildet sind, so dass die Sitzseitenkraft erfassbar ist.

10. Mehrspuriges kurvenneigbares Fahrzeug
nach Anspruch 9,
**dadurch gekennzeichnet, dass**
die elastischen Zentriermittel als Federzentriermittel (17) mit einer variablen, bei zunehmender Geschwindigkeit des Fahrzeugs zunehmenden Federvorspannung und somit zunehmenden Rückstellkraft ausgebildet sind.

11. Mehrspuriges kurvenneigbares Fahrzeug
nach einem der Ansprüche 1 bis 10,
**dadurch gekennzeichnet, dass**
• die Mittel zum seitlichen Neigen (4) hydraulisch ansteuerbar sind,
und
• die Wirkverbindung zwischen den Erfassungsmitteln (9a, 9b, 9c) und den Mitteln zum seitlichen Neigen (4) als Hydraulikverbindung und
• die Erfassungsmittel (9a, 9b, 9c) als hydraulische Erfassungsmittel, insbesondere ein hydraulisches Ventil, beispielsweise ein 4/3-Wegeventil, mittels welchen die Mittel zum seitlichen Neigen (4) über die Hydraulikverbindung ansteuerbar sind,
ausgebildet sind.

12. Mehrspuriges kurvenneigbares Fahrzeug
nach einem der Ansprüche 1 bis 10,
**dadurch gekennzeichnet, dass**
• die Mittel zum seitlichen Neigen (4) elektrisch ansteuerbar sind,
und
• die Wirkverbindung zwischen den Erfassungsmitteln (9a, 9b, 9c) und den Mitteln zum seitlichen Neigen (4) als elektrische Signalverbindung und
• die Erfassungsmittel (9a, 9b, 9c) als elektrische Erfassungsmittel - insbesondere ein Piezo-Sensor - mittels welchen die Mittel zum seitlichen Neigen (4) über die elektrische Signalverbindung ansteuerbar sind,
ausgebildet sind.

13. Verfahren zum Neigen eines mehrspurigen kurvenneigbaren Fahrzeugs mit
• Mitteln zum seitlichen Neigen (4) wenigstens eines Abschnitts (5) des Fahrzeuges um eine im Wesentlichen zu der Fahrzeuglängsachse (3) parallele Neigachse (6), so dass während einer Fahrt - insbesondere zur Kurvenfahrt oder bei schrägem oder unebenem Untergrund - der Schwerpunkt des Fahrzeugs quer zur Fahrtrichtung (7) verlagerbar ist,
• mindestens einem Fahrzeugsitz (8a, 8b, 8c), der auf dem neigbaren Abschnitt (5) des Fahrzeugs angeordnet ist, für einen das Fahrzeug steuernden Fahrer, und
• Erfassungsmittel (9a, 9b, 9c) zur Erfassung einer Sitzseitenkraft, die der Körper des Fahrers zumindest auf einen Fahrzeugsitz-Abschnitt des Fahrzeugsitzes (8a, 8b, 8c) in eine seitliche Querrichtung (10a, 10b, 10c) zur Fahrtrichtung (7) ausübt,
mit den sich wiederholenden Schritten
• Erfassen der Sitzseitenkraft über die Erfassungsmittel (9a, 9b, 9c),
• Erfassen der Geschwindigkeit des Fahrzeugs, und
• Neigen wenigstens des Abschnitts (5) des Fahrzeuges zu einer Seite, wobei
■ die Seite durch die Richtung der Sitzseitenkraft bestimmt wird und
■ die Neiggeschwindigkeit eine Funktion zumindest aus der Grösse der erfassten Sitzseitenkraft und der erfassten Geschwindigkeit ist und bei zunehmender Sitzseitenkraft - mit einem bei zunehmender Geschwindigkeit des Fahrzeugs sinkendem Faktor - die Neiggeschwindigkeit erhöht wird.

14. Verfahren nach Anspruch 13, wobei
das Neigen zu derjenigen Seite, die der Richtung der Sitzseitenkraft entspricht, erfolgt.

15. Verfahren nach Anspruch 13, wobei
das Neigen zu derjenigen Seite, die der Richtung der Sitzseitenkraft entgegengesetzt ist, erfolgt.

## Claims

1. Multitrack curve-tilting vehicle having at least three support elements (1a, 1b, 1c) - in particular wheels or skids - at least for transmitting a lateral guide force between the vehicle and a surface (2),
• at least two (1a, 1b) of the at least three support elements being arranged laterally on opposite sides with respect to the longitudinal axis (3) of the vehicle and
• at least one (1c) of the at least three support elements being steerable for controlling the direction of the vehicle, comprising
• means for lateral tilting (4) of at least one section (5) of the vehicle about a tilt axis (6) substantially parallel to the longitudinal axis (3) of the vehicle so that the centre of gravity of the vehicle can be shifted transversely to the direction of travel (7) during travelling - in particular for travelling around a curve or in the case of an inclined or uneven surface, and
• at least one vehicle seat (8a, 8b, 8c) which is arranged on the tiltable section (5) of the vehicle, for a driver controlling the vehicle,
**characterized in that**
• registration means (9a, 9b, 9c) are provided for registering a lateral seat force which the body of the driver exerts at least on a vehicle seat section of the vehicle seat (8a, 8b, 8c) in a lateral transverse direction (10a, 10b, 10c) to the direction of travel (7),
• the registration means (9a, 9b, 9c) have such an operative connection to the means for lateral tilting (4) that
o the lateral tilting takes place as a function of the lateral seat force registered and
o the tilting speed is a function at least of the lateral seat force and the speed of the vehicle, the tilting speed increasing with increasing lateral seat force - by a factor decreasing with increasing speed of the vehicle.

2. Multitrack curve-tilting vehicle according to Claim 1, **characterized in that**
• the support elements are in the form of wheels (1a, 1b, 1c) and the vehicle is in the form of a three-wheeled vehicle (30) having a curve-tilting vehicle frame (5), two (1a, 1b) of the three wheels being arranged side by side substantially symmetrically to the longitudinal axis (3) of the vehicle and the third wheel (1c) being arranged centrally offset substantially in the longitudinal axis (3) of the vehicle, and
• the lateral tilt being effected by the means for lateral tilting (4), and the vehicle being designed, in such a way that the wheels (1a, 1b, 1c) assume an oblique position corresponding to the tilt and the two wheels (1a, 1b) located side by side act as a single central fictitious wheel substantially in the longitudinal axis (3) of the vehicle.

3. Multitrack curve-tilting vehicle according to Claim 1 or 2, **characterized in that**
• at least the vehicle seat section of the vehicle seat (8a, 8b, 8c) is moveable in a lateral transverse direction (10a, 10b, 10c) to the direction of travel (7) within a range of movement (11a, 11b, 11c) of the vehicle seat and
• the registration means (9a, 9b, 9c) are designed in such a way that they quantitatively or qualitatively register the lateral seat force by direct or indirect force measurement or displacement measurement at least on the vehicle seat section of the vehicle seat (8a, 8b, 8c).

4. Multitrack curve-tilting vehicle according to Claim 3, **characterized in that** the vehicle seat (8a) or the vehicle seat section is mounted by means of a joint bearing (12) having a vehicle seat axis of rotation (13) substantially parallel to the longitudinal axis (3) of the vehicle and central relative to the vehicle seat, so that the vehicle seat (8a) is pivotable about the axis of rotation (13) of the vehicle seat in the lateral transverse direction (10a) to the direction of travel (7) within the range of movement (11a) of the vehicle seat.

5. Multitrack curve-tilting vehicle according to Claim 3, **characterized in that**
• the vehicle seat (8b) has a backrest (14) having lateral bulges (15) for lateral retention of the upper body of the driver and
• the lateral bulges (15) form the vehicle seat section which is moveable in the lateral transverse direction (10b) to the direction of travel (7) within the range of movement (11b) of the vehicle seat.

6. Multitrack curve-tilting vehicle according to Claim 3, **characterized in that**
• the vehicle seat (8c) comprises a seat surface (16) or is in the form of a seat surface (16) and
• the seat surface (16) forms the vehicle seat section which is moveable in the lateral transverse direction (10c) to the direction of travel (7) within the range of movement (11c) of the vehicle seat.

7. Multitrack curve-tilting vehicle according to Claim 4 or 5, **characterized in that** the operative connection between the registration means (9a, 9b) and the means for lateral tilting (4) is formed in such a way that the lateral tilting takes place to that side which corresponds to the direction of the lateral seat force.

8. Multitrack curve-tilting vehicle according to Claim 6, **characterized in that** the operative connection between the registration means (9c) and the means for lateral tilting (4) is formed in such a way that the lateral tilting takes place to that side which is opposite the direction of the lateral seat force.

9. Multitrack curve-tilting vehicle according to any of Claims 3 to 8, **characterized in that**
• elastic centring means (17) are provided which centre at least the vehicle seat section moveable in the lateral transverse direction (10a, 10b, 10c) to the direction of travel (7) within the range of movement (11a, 11b, 11c) of the vehicle seat via a restoring force in a central starting position, so that the lateral seat force can be determined from the position of at least the vehicle seat section of the vehicle seat (8a, 8b, 8c) within the range of movement (11a, 11b, 11c) of the vehicle seat, and
• the registration means are in the form of at least one position detector (9a, 9b, 9c) which registers the position of at least the vehicle seat section of the vehicle seat within the range of movement via the vehicle seat, so that the lateral seat force can be registered.

10. Multitrack curve-tilting vehicle according to Claim 9, **characterized in that** the elastic centring means are in the form of spring centring means (17) having a variable spring pretension, increasing with increasing speed of the vehicle, and hence increasing restoring force.

11. Multitrack curve-tilting vehicle according to any of Claims 1 to 10, **characterized in that**
• the means for lateral tilting (4) are hydraulically actuatable
and
• the operative connection between the registration means (9a, 9b, 9c) and the means for lateral tilting (4) are in the form of a hydraulic connection and
• the registration means (9a, 9b, 9c) are in the form of hydraulic registration means, in particular a hydraulic valve, for example a 4/3-way valve, by means of which the means for lateral tilting (4) can be actuated via the hydraulic connection.

12. Multitrack curve-tilting vehicle according to any of Claims 1 to 10, **characterized in that**
• the means for lateral tilting (4) are electrically actuatable
and
• the operative connection between the registration means (9a, 9b, 9c) and the means for lateral tilting (4) are in the form of an electrical signal connection and
• the registration means (9a, 9b, 9c) are in the form of electrical registration means - in particular a piezoelectric sensor - by means of which the means for lateral tilting (4) can be actuated via the electrical signal connection.

13. Method for tilting a multitrack curve-tilting vehicle, comprising
• means for lateral tilting (4) of at least one section (5) of the vehicle about a tilt axis (6) substantially parallel to the longitudinal axis (3) of the vehicle, so that the centre of gravity of the vehicle can be shifted transversely to the direction of travel (7) during travelling - in particular for travelling around a curve or in the case of an inclined or uneven surface,
• at least one vehicle seat (8a, 8b, 8c) which is arranged on the tiltable section (5) of the vehicle for a driver controlling the vehicle, and
• registration means (9a, 9b, 9c) for registering a lateral seat force which the body of the driver exerts at least on a vehicle seat section of the vehicle seat (8a, 8b, 8c) in a lateral transverse direction (10a, 10b, 10c) to the direction of travel (7),
comprising the repeating steps
• registration of the lateral seat force via the registration means (9a, 9b, 9c),
• registration of the speed of the vehicle and
• tilting of at least the section (5) of the vehicle to one side,
o the side being determined by the direction of the lateral seat force and
o the tilting speed being a function at least of the magnitude of the registered lateral seat force and of the registered speed, and the tilting speed being increased with increasing lateral seat force - by a factor decreasing with increasing speed of the vehicle.

14. Method according to Claim 13, the tilting being effected to that side which corresponds to the direction of the lateral seat force.

15. Method according to Claim 13, the tilting being effected to that side which is opposite to the direction of the lateral seat force.

## Revendications

1. Véhicule multipiste inclinable dans les courbes comprenant au moins trois éléments d'appui (1a, 1b, 1c) - en particulier des roues ou des patins - au moins pour transmettre une force de guidage latérale entre le véhicule et un sol (2), où
• au moins deux (1a, 1b) des au moins trois éléments d'appui sont disposés latéralement, sur des côtés opposés par rapport à l'axe longitudinal de véhicule (3), et
• au moins un (1c) des au moins trois éléments d'appui est manoeuvrable directionnellement, pour assurer une commande directionnelle du véhicule,
avec
• des moyens d'inclinaison latérale (4) au moins d'un tronçon (5) du véhicule, autour d'un axe d'inclinaison (6) sensiblement parallèle à l'axe longitudinal de véhicule (3), de manière que, pendant un roulage - en particulier par rapport à un roulage en courbe ou dans le cas où le sol est incliné ou n'est pas plan - le centre de gravité du véhicule soit déplaçable transversalement par rapport à la direction de roulage (7), et
• au moins un siège de véhicule (8a, 8b, 8c) disposé sur le tronçon (5) inclinable du véhicule, pour un conducteur commandant le véhicule,
**caractérisé en ce que**
• des moyens de détection (9a, 9b, 9c) sont prévus, pour détecter une force latérale sur le siège, que le corps du conducteur exerce au moins sur un tronçon de siège de véhicule du siège de véhicule (8a, 8b, 8c) dans une direction transversale (10a, 10b, 10c) latérale par rapport à la direction de roulage (7),
• les moyens de détection (9a, 9b, 9c) sont placés en une liaison fonctionnelle avec les moyens d'inclinaison latérale (4), de manière que
• l'inclinaison latérale se fasse en fonction de la force latérale sur le siège, ayant été détectée, et
• la vitesse d'inclinaison est une fonction au moins de la force latérale sur le siège et de la vitesse du véhicule, la vitesse d'inclinaison augmentant - avec un facteur qui diminue lorsque la vitesse du véhicule augmente - lorsque la force latérale sur le siège augmente.

2. Véhicule multipiste inclinable dans les courbes selon la revendication 1,
**caractérisé en ce que**
• les éléments d'appui sont réalisés sous la forme de roues (1a, 1b, 1c) et le véhicule est réalisé sous la forme d'un véhicule à trois roues (30) avec un cadre de véhicule (5) pouvant être incliné en courbe, où deux (1a, 1b) des trois roues sont disposées l'une à côté de l'autre, sensiblement symétriquement par rapport à l'axe longitudinal de véhicule (3), et la troisième roue (1c) est disposée de façon décalée centralement, sensiblement dans l'axe longitudinal de véhicule (3), et
• l'inclinaison latérale s'effectue à l'aide des moyens d'inclinaison latérale (4), de manière que, et le véhicule est configuré de façon que, les roues (1a, 1b, 1c) prennent une position inclinée correspondant à l'inclinaison, et les deux roues (1a, 1b) situées l'une à côté de l'autre agissent comme une roue fictive centrale unique, sensiblement dans l'axe longitudinal de véhicule (3).

3. Véhicule multipiste inclinable dans les courbes selon la revendication 1 ou 2,
**caractérisé en ce que**
• au moins le tronçon de siège de véhicule, du siège de véhicule (8a, 8b, 8c), est mobile dans une direction transversale latérale (10a, 10b, 10c) par rapport à la direction de roulage (7), dans les limites d'une plage de déplacement de siège de véhicule (11a, 11b, 11c), et
• les moyens de détection (9a, 9b, 9c) sont configurés de manière qu'ils détectent la force latérale sur le siège, de façon quantitative ou qualitative, par mesure, directe ou indirecte, d'une force ou d'une distance au moins sur le tronçon de siège de véhicule du siège de véhicule (8a, 8b, 8c).

4. Véhicule multipiste inclinable dans les courbes selon la revendication 3,
**caractérisé en ce que**
le siège de véhicule (8a) ou le tronçon de siège de véhicule est monté, par l'intermédiaire d'un palier d'articulation (12) ayant un axe de rotation de siège de véhicule (13) central, sensiblement parallèle à l'axe longitudinal de véhicule (3) et central par rapport au siège de véhicule, de manière que le siège de véhicule (8a) puisse pivoter autour de l'axe de rotation de siège de véhicule (13) dans la direction transversale latérale (10a) par rapport à la direction de roulage (7), dans les limites de la plage de déplacement de siège de véhicule (11a).

5. Véhicule multipiste inclinable dans les courbes selon la revendication 3,
**caractérisé en ce que**
• le siège de véhicule (8b) présente un dossier (14) avec des bourrelets latéraux (15) pour assurer un maintien latéral du corps supérieur du conducteur, et
• les bourrelets latéraux (15) forment le tronçon de siège de véhicule mobile dans la direction transversale latérale (10b) par rapport à la direction de roulage (7), dans les limites de la plage de déplacement de siège de véhicule (11b).

6. Véhicule multipiste inclinable dans les courbes selon la revendication 3,
**caractérisé en ce que**
• le siège de véhicule (8c) comprend une surface d'assise (16), ou est réalisé sous la forme d'une surface d'assise (16), et
• la surface d'assise (16) forme le tronçon de siège de véhicule mobile dans la direction transversale latérale (10c) par rapport à la direction de roulage (7), dans les limites de la plage de déplacement de siège de véhicule (11c).

7. Véhicule multipiste inclinable dans les courbes selon la revendication 4 ou 5,
**caractérisé en ce que**
la liaison fonctionnelle, entre les moyens de détection (9a, 9b) et les moyens d'inclinaison latérale (4), est réalisée de manière que l'inclinaison latérale se fasse par rapport au côté qui correspond à la direction de la force latérale sur le siège.

8. Véhicule multipiste inclinable dans les courbes selon la revendication 6,
**caractérisé en ce que**
la liaison fonctionnelle entre les moyens de détection (9c) et les moyens d'inclinaison latérale (4) est réalisée de manière que l'inclinaison latérale se fasse par rapport au côté opposé à la direction de la force latérale sur le siège.

9. Véhicule multipiste inclinable dans les courbes selon l'une des revendications 3 à 8,
**caractérisé en ce que**
• des moyens de centrage (17) élastiques sont prévus, qui centrent au moins le tronçon de siège de véhicule mobile dans la direction transversale latérale (10a, 10b, 10c) par rapport à la direction de roulage (7), dans les limites de la plage de déplacement de siège de véhicule (11a, 11b, 11c), par l'intermédiaire d'une force de rappel, en une position initiale centrale, de manière que, à partir de la position au moins du tronçon de siège de véhicule du siège de véhicule (8a, 8b, 8c), dans les limites de la plage de déplacement de siège de véhicule (11a, 11b, 11c), la force latérale sur le siège puisse être déterminée, et
• les moyens de détection sont réalisés sous la forme d'au moins un détecteur de position (9a, 9b, 9c) détectant la position au moins du tronçon de siège de véhicule du siège de véhicule dans les limites de la plage de déplacement de siège de véhicule, de manière à pouvoir détecter la force latérale sur le siège.

10. Véhicule multipiste inclinable dans les courbes selon la revendication 9,
**caractérisé en ce que**
les moyens de centrage élastiques sont réalisés sous la forme de moyens de centrage élastiques (17) avec une précontrainte élastique variable allant en augmentant, et ainsi avec une force de rappel allant en augmentant, avec la vitesse du véhicule.

11. Véhicule multipiste inclinable dans les courbes selon l'une des revendications 1 à 10,
**caractérisé en ce que**
• les moyens d'inclinaison latérale (4) sont susceptibles d'être commandés hydrauliquement,
et
• la liaison fonctionnelle entre les moyens de détection (9a, 9b, 9c) et les moyens d'inclinaison latérale (4) sont réalisés sous la forme de liaison hydraulique et
• les moyens de détection (9a, 9b, 9c) sont réalisés sous la forme de moyens de détection hydrauliques, en particulier d'une soupape hydraulique, par exemple d'une soupape à canaux de type 4/3, au moyen de laquelle les moyens d'inclinaison latérale (4) peuvent être commandés par l'intermédiaire de la liaison hydraulique.

12. Véhicule multipiste inclinable dans les courbes selon l'une des revendications 1 à 10,
**caractérisé en ce que**
• les moyens d'inclinaison latérale (4) sont susceptibles d'être commandés électriquement,
et
• la liaison fonctionnelle entre les moyens de détection (9a, 9b, 9c) et les moyens d'inclinaison latérale (4) est susceptible d'être réalisée sous la forme de liaison de signalisation électrique, et
• les moyens de détection (9a, 9b, 9c) sont réalisés sous la forme de moyens de détection électriques - en particulier un capteur piézoélectrique - au moyen duquel les moyens d'inclinaison latérale (4) sont susceptibles d'être commandés par l'intermédiaire de la liaison de signalisation électrique.

13. Procédé d'inclinaison d'un véhicule multipiste inclinable dans les courbes, comprenant
• des moyens pour l'inclinaison latérale (4) d'au moins un tronçon (5) du véhicule, autour d'un axe d'inclinaison (6) sensiblement parallèle à l'axe longitudinal de véhicule (3), de manière que, pendant un roulage - en particulier pour un roulage en courbe ou lorsque le sol est incliné ou n'est pas plan - le centre de gravité du véhicule soit déplaçable transversalement par rapport à la direction de roulage (7),
• au moins un siège de véhicule (8a, 8b, 8c) disposé sur le tronçon inclinable (5) du véhicule, pour un conducteur commandant le véhicule, et
• des moyens de détection (9a, 9b, 9c) pour détecter une force latérale sur le siège, qu'exerce le corps du conducteur au moins sur un tronçon de siège de véhicule du siège de véhicule (8a, 8b, 8c) dans une direction transversale latérale (10a, 10b, 10c) par rapport à la direction de roulage (7),
avec les étapes se répétant
• détection de la force latérale agissant sur le siège, par l'intermédiaire des moyens de détection (9a, 9b, 9c),
• détection de la vitesse du véhicule, et
• inclinaison au moins du tronçon (5) du véhicule sur un côté, où
• le côté est déterminé par la direction de la force latérale sur le siège, et
• la vitesse d'inclinaison est une fonction au moins de la valeur de la force latérale agissant sur le siège, telle que détectée, et de la vitesse détectée et, lorsque la vitesse latérale sur le siège augmente, la vitesse d'inclinaison est augmentée - avec un facteur diminuant lorsque la vitesse du véhicule augmente.

14. Procédé selon la revendication 13, où
l'inclinaison se fait vers le côté correspondant à la direction de la force latérale sur le siège.

15. Procédé selon la revendication 13, où
l'inclinaison se fait vers le côté opposé à la direction de la force latérale sur le siège.
